# FASCICULE DE BREVET EUROPEEN

(11) **EP 3 250 533 B1**
(45) Date de publication et mention de la délivrance du brevet: **09.03.2022**
(21) Numéro de dépôt: 16707855.9
(22) Date de dépôt: 01.02.2016
(51) Int. Cl.: C03C 25/34, C09J 161/04

(54) **MATS DE FIBRES MINÉRALES COMPRENANT UN LIANT À BASE DE LIGNOSULFONATE ET D'UN COMPOSÉ CARBONYLE**
MINERALFASERMATTEN ENTHALTEND EIN BINDEMITTEL AUF BASIS VON LIGNOSULFONAT UND EINER CARBONYLVERBINDUNG
MINERAL FIBRE MATS COMPRISING A BINDER BASED ON LIGNOSULFONATE AND A CARBONYL COMPOUND

(30) Priorité: 30.01.2015 FR 1550717; 30.01.2015 FR 1550719
(43) Date de publication de la demande: 06.12.2017
(73) Titulaire: Saint-Gobain Adfors, 73000 Chambéry (FR); Institut national de recherche pour l'agriculture, l'alimentation et l'environnement, 75007 Paris (FR)
(72) Inventeur: ALLAIS, Florent, 51400 Bouy (FR); DUCROT, Paul-Henri, 91430 Igny (FR); BROUSSARD, Orianne, 91400 Orsay (FR); PETIT, Morgane, 75007 Paris (FR); SILIOC, Christelle, 69970 Chaponnay (FR)
(74) Mandataire: Saint-Gobain Recherche
(86) Numéro de dépôt international: PCT/FR2016/050204
(87) Numéro de publication internationale: WO 2016/120575

(56) Documents cités:
- CN-A- 103 031 108
- FR-A1- 2 208 963
- FR-A1- 2 976 583
- US-A- 3 296 159
- US-A1- 2014 113 123

## Description

La présente invention se rapporte au domaine des produits comprenant des fibres minérales, notamment de verre, liées par un liant organique exempt de formaldéhyde.

La présente description concerne plus particulièrement un liant aqueux apte à réticuler thermiquement qui renferme au moins un lignosulfonate et au moins un composé carbonylé, ainsi que les produits à base de fibres minérales qui en résultent.

Les produits à base de fibres minérales auxquels se rapporte plus particulièrement l'invention sont des mats de fibres minérales, notamment de verre, (aussi appelés « intissés » ou « non-tissés ») qui sont fabriqués selon les procédés connus opérant par la voie sèche ou la voie humide.

Dans le procédé par voie sèche, de la matière fondue contenue dans un four est acheminée vers un ensemble de filières à partir desquelles des filaments s'écoulent par gravité et sont étirés par un fluide gazeux. Les filaments minéraux continus sont récoltés sur un convoyeur où ils s'entremêlent en formant un mat.

Sur la face supérieure du mat ainsi formé, on applique un liant à l'aide d'un dispositif adapté, le plus souvent opérant par dépôt par rideau, et on élimine l'excès de liant par aspiration au niveau de la face opposée. Le mat entre ensuite dans un dispositif contenant de l'air chaud dont la température, de l'ordre de 200 à 250°C, est adaptée pour éliminer l'eau et réticuler le liant en un temps très court, de l'ordre d'une dizaine de secondes à 1 minute, puis le mat de fibres minérales est collecté sous la forme d'un enroulement.

Dans le procédé par voie humide, le mat est obtenu à partir d'une dispersion aqueuse de fibres minérales coupées qui est déposée au moyen d'une tête de formage sur un convoyeur muni de perforations et l'eau est extraite à travers le convoyeur grâce à un caisson d'aspiration. Les fibres minérales coupées restant sur le convoyeur forment un mat qui est traité dans les mêmes conditions que celles décrites pour le procédé par voie sèche.

Dans les procédés précités, le liant a pour fonction de lier les fibres minérales entre-elles et de conférer au mat qui les contient des propriétés mécaniques adaptées à l'usage désiré, notamment une rigidité suffisante pour pouvoir être manipulé facilement sans risque qu'il puisse être déchiré.

Le liant à appliquer sur les fibres minérales se présente généralement sous la forme d'une solution aqueuse renfermant au moins une résine thermodurcissable et des additifs tels qu'un catalyseur de réticulation de la résine, un silane promoteur d'adhérence, un hydrofugeant, ...

Les résines thermodurcissables les plus couramment utilisées sont des résines à base de formaldéhyde, notamment phénoliques appartenant à la famille des résols, des résines urée-formaldéhyde et des résines mélamine-formaldéhyde. Ces résines ont une bonne aptitude à réticuler dans les conditions thermiques précitées, sont solubles dans l'eau, possèdent une bonne affinité pour les fibres minérales et sont en outre relativement peu coûteuses.

Toutefois, ces résines sont susceptibles de contenir du formaldéhyde libre dont la présence n'est pas souhaitée du fait des effets indésirables au regard de la santé humaine et de l'environnement. Depuis plusieurs années, la réglementation en matière de protection de l'environnement devient plus contraignante et oblige les fabricants de résine et de produits fibreux à rechercher des solutions permettant d'abaisser encore le taux de formaldéhyde libre.

Des solutions de remplacement des résines à base de formaldéhyde pour lier des fibres minérales sont connues et se fondent sur l'emploi d'un polymère d'acide carboxylique en combinaison avec un β-hydroxylamide et un acide carboxylique monomérique au moins trifonctionnel (US 5 340 868).

Il a été proposé des compositions adhésives comprenant une alcanolamine renfermant au moins deux groupements hydroxyle et un polymère polycarboxylique (US 6 071 994, US 6 099 773, US 6 146 746, US2002/091185).

Il a aussi été décrit des compositions adhésives comprenant un polymère polycarboxylique, un polyol et un catalyseur, lequel catalyseur contient du phosphore (US 5 318 990, US 5 661 213, US 6 331 350, US 2003/0008978), un fluoroborate (US 5 977 232) ou bien un cyanamide, un dicyanamide ou un cyanoguanidine (US 5 932 689).

Par ailleurs, on connaît des compositions adhésives à base de saccharides aptes à réticuler sous l'effet de la chaleur.

Dans US 5 895 804, la composition adhésive comprend un polymère polycarboxylique ayant au moins deux groupes fonctionnels acide carboxylique et un poids moléculaire au moins égal à 1000, et un polysaccharide ayant un poids moléculaire au moins égal à 10000.

CN 103 031 108 A divulgue une méthode de fabrication d'une composition adhésive comprenant du glyoxal et lignosulfate de métal alcalin, sous la forme d'une solution aqueuse. FR 2 208

963 A1 divulgue une composition adhésive aqueuse comprenant des lignosulfates de metaux alcalins ou alcalino-terreux et du furfural.

US 2014/113123 A1 divulgue une composition aqueuse de liant pour les tapis de fibres minérales, comprenant un lignosulfate et une résine de phénol-formaldéhyde thermodurcissable.

Enfin, WO 2012/172252 décrit un liant aqueux sans formaldéhyde pour des mats de fibres qui comprend (en parts pondérales) : un sel d'acide lignosulfonique (20 à 95 parts), un oligosaccharide (5 à 80 parts) et un catalyseur de réticulation choisi parmi les composés contenant du phosphore et les sulfates (5 à 20 parts pour 100 parts de sel d'acide lignosulfonique et d'oligosaccharides).

La présente invention s'intéresse plus particulièrement aux produits fibreux à base de fibres minérales, notamment de verre, qui se présentent sous la forme de mats, selon la revendication 1.

En particulier, les mats visés sont destinés à la fabrication de membranes d'étanchéité bitumineuses pour toitures (« roofing membranes » en anglais).

La présente divulgation a pour but de proposer une alternative aux liants susceptibles de contenir ou de générer du formaldéhyde, et qui permettent de conférer de bonnes propriétés mécaniques aux mats à base de fibres minérales, notamment une contrainte à la rupture améliorée.

Ce but est atteint grâce au liant aqueux pour des fibres minérales, notamment de verre, qui comprend
- au moins un lignosulfonate d'ammonium ou un sel de métal alcalin ou alcalino-terreux d'acide lignosulfonique, et
- au moins un composé carbonylé de formule

   R-[C(O)R₁]ₓ (I)

   dans laquelle :
   - R représente un radical hydrocarboné, linéaire, ramifié ou cyclique, saturé ou insaturé, un radical renfermant un ou plusieurs noyaux aromatiques constitués de 5 ou 6 atomes de carbone, un radical renfermant un ou plusieurs hétérocycles aromatiques contenant 4 ou 5 atomes de carbone et un atome d'oxygène, d'azote ou de soufre, le radical R pouvant contenir d'autres groupements fonctionnels, notamment hydroxyle ou alkoxy, en particulier méthoxy,
   - R₁ représente un atome d'hydrogène ou un radical alkyle en C₁-C₁₀, et
   - x varie 1 à 10,
   ledit liant étant exempt de sucre hydrogéné et de mélamine.

Le lignosulfonate d'ammonium est un sous-produit issu du traitement du bois pour la fabrication de la pâte à papier selon le procédé dit « au sulfite ». Le traitement de la pâte à papier par du sulfite d'ammonium ou du bisulfite d'ammonium permet d'obtenir des lignosulfonates d'ammonium.

Le lignosulfonate d'ammonium permet en outre de conférer au liant des propriétés de résistance au feu.

Les sels de métal alcalin ou alcalino-terreux d'acide sulfonique sont généralement des mélanges complexes de plusieurs acides lignosulfoniques sous forme salifiée, communément dénommés « lignosulfonates ». Les lignosulfonates sont des sous-produits issus du traitement du bois pour la fabrication de la pâte à papier selon le procédé « au sulfite » mentionné plus haut qui met en œuvre un sulfite ou un bisulfite. Selon la nature du contre-ion du sulfite ou du bisulfite employé, on obtient notamment des sels de métal alcalin ou alcalino-terreux d'acide lignosulfonique. Dans la présente invention, les sels de métal alcalin d'acide lignosulfonique préférés sont les lignosulfonates de sodium ou de potassium, avantageusement de sodium, et les sels de métal alcalino-terreux d'acide lignosulfonique préférés sont les lignosulfonates de magnésium ou de calcium.

Le composé carbonylé est un aldéhyde monofonctionnel ou polyfonctionnel choisi dans le groupe constitué par l'acétaldéhyde, le propionaldéhyde, le diméthoxyéthanal, le butyraldéhyde, notamment n-butyraldéhyde, le glyoxal, le malonaidéhyde, le succinaldéhyde, le glutaraldéhyde, le 2-hydroxyglutaraldéhyde, le 3-méthylglutaraldéhyde, l'adipaldéhyde, le subéraldéhyde, le sébacaldéhyde, le maléaldéhyde, le fumaraldéhyde, les poly(acroléines), l'amidon dialdéhyde, le furfural (2-furancarboxyaldéhyde), le 5-méthylfurfural (2-méthyl-5-furancarboxyaldéhyde), l'hydroxyméthylfurfural (2-hydroxyméthyl-5-furancarboxyaldéhyde), le 2,5-furancarboxydialdéhyde, la vaniline et les polymères de vaniline, notamment la bis-vaniline, le cinnamaldéhyde et les polymères de cinnamaldéhyde, le phtalaldéhyde, l'isophtalaldéhyde, le téréphtalaldéhyde et les oligomères de formule (III) et (IV) suivantes : 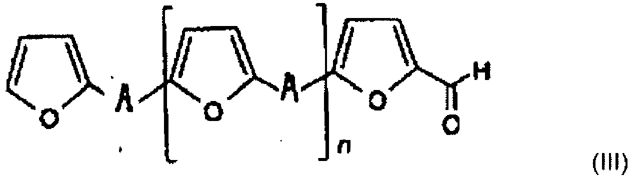 dans laquelle :
A représente un radical divalent -CH₂-, -CH(OH)- ou -CH₂-O-CH₂-,
n varie de 1 à 8, 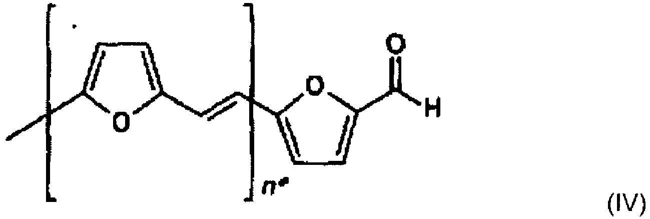
dans laquelle n' varie de 1 à 9.

L'hydroxyméthylfurfural est particulièrement préféré.

Dans le liant, le lignosulfonate d'ammonium ou le sel de métal alcalin ou alcalino-terreux d'acide lignosulfonique représente généralement 30 à 95 % du poids du mélange constitué par le lignosulfonate d'ammonium ou le sel de métal alcalin ou alcalino-terreux d'acide lignosulfonique et le composé carbonylé de formule (I), de préférence 40 à 80 % et avantageusement 50 à 70 %.

Le liant peut comprendre en outre :
- au moins un homopolymère d'acétate de vinyle ou un copolymère d'acétate de vinyle et d'au moins un monomère hydrophobe tel que l'éthylène, le propylène, le butylène, le styrène ou le chlorure de vinyle, de préférence l'éthylène. L'homopolymère et le copolymère précités sont généralement présents en une quantité au plus égale à 15 parts en poids pour 100 parts en poids de lignosulfonate d'ammonium ou de sel de métal alcalin ou alcalino-terreux d'acide lignosulfonique et de composé carbonylé de formule (I), et
- au moins un polysaccharide, par exemple un amidon. Le polysaccharide est généralement présent en une quantité au plus égale à 50 parts en poids pour 100 parts en poids de lignosulfonate d'ammonium ou de sel de métal alcalin ou alcalino-terreux d'acide lignosulfonique et de composé carbonylé (I).

Lorsque le liant contient du lignosulfonate d'ammonium, il peut renfermer en outre au moins un composé choisi parmi les composés contenant du phosphore et le sulfate d'ammonium.

A titre d'exemples de composés contenant du phosphore, on peut citer les sels d'hypophosphite de métal alcalin, les phosphites de métal alcalin, les polyphosphates de métal alcalin, les hydrogénophosphates de métal alcalin, les acides phosphoriques et les acides alkylphosphoniques, dans lesquels le métal alcalin est de préférence le sodium ou le potassium, et les phosphates d'ammonium, notamment le phosphate diammonique. La teneur en composé précité est au plus égale à 20 parts en poids pour 100 parts en poids de lignosulfonate d'ammonium et de composé carbonylé de formule (I).

Le liant conforme à l'invention peut encore comprendre les additifs conventionnels ci-après dans les proportions suivantes calculées sur la base de 100 parts en poids de lignosulfonate d'ammonium ou de sel de métal alcalin ou alcalino-terreux d'acide lignosulfonique et de composé carbonylé de formule (I):
- 0 à 1 part en poids de silane, de préférence 0,1 à 0,5 part,
- 0 à 5 parts en poids d'un silicone, d'une huile végétale ou d'un composé fluoré, de préférence 0,1 à 1 part, et
- 0 à 5 parts d'un agent plastifiant, en particulier le glycérol.

Le rôle des additifs est connu et brièvement rappelé : le silane est un agent de couplage entre les fibres et le liant, et joue également le rôle d'agent anti-vieillissement; le silicone, l'huile végétale et le composé fluoré sont des agents hydrofugeants qui ont pour fonction de réduire l'absorption d'eau par le mat de fibres minérales.

Le liant se présente sous la forme d'une solution aqueuse.

Lorsque le liant contient du lignosulfonate d'ammonium, le silane préféré est un aminosilane.

Le liant contenant un sel de métal alcalin ou alcalino-terreux d'acide lignosulfonique est exempt de composés azotés, ce qui est avantageux car de ce fait les émissions de gaz générés durant le traitement thermique visant à réticuler le liant ne contiennent pas d'azote. Le traitement des rejets à la sortie de l'étuve dans les installations industrielles est ainsi plus aisé à mettre en œuvre.

Le liant est plus particulièrement destiné à être appliqué sur des fibres minérales constituées de verre ou d'une roche, en particulier de basalte, et de préférence de verre pour former un mat.

De manière classique, on dépose le liant sur un mat de fibres minérales (formé par la voie sèche ou la voie humide), puis le mat est traité à une température permettant la réticulation du liant qui devient alors infusible. La réticulation du liant est généralement effectuée dans des conditions comparables à celle d'une résine conventionnelle contenant du formaldéhyde, généralement à une température qui varie de 200 à 220°C, et pendant une durée très courte, de l'ordre de quelques secondes à 1 minute.

Les fibres minérales sont aussi bien des filaments minéraux que des fils composés d'une multitude de filaments minéraux liés ensemble, notamment par un ensimage, et des assemblages de tels fils. Les filaments et les fils minéraux peuvent être continus ou discontinus.

Ainsi, selon un premier mode de réalisation, le mat de fibres minérales est composé de filaments minéraux discontinus de longueur pouvant atteindre 150 mm, de préférence variant de 20 à 100 mm, et avantageusement de 50 à 70 mm, et ayant un diamètre qui peut varier dans une large mesure, par exemple de 5 à 30 µm.

Selon un deuxième mode de réalisation, le mat de fibres minérales est composé de fils minéraux.

Les fils minéraux peuvent être des fils composés d'une multitude de filaments minéraux (ou fils de base) ou des assemblages de ces fils de base en stratifils (« rovings » en anglais).

Les fils précités peuvent être des fils sans torsion ou des fils retordus (ou fils textiles), de préférence sans torsion.

Les fils minéraux, notamment de verre, sont généralement coupés à une longueur pouvant aller jusqu'à 100 mm, de préférence variant de 6 à 30 mm, avantageusement de 8 à 20 mm et mieux encore de 10 à 18 mm.

Le diamètre des filaments de verre constituant les fils peut varier dans une large mesure, par exemple de 5 à 30 µm. de la même manière, de larges variations peuvent survenir dans la masse linéique du fils qui peut aller de 34 à 1500 tex.

Le verre entrant dans la constitution des filaments peut être de tout type, par exemple C, E, R ou AR (alcali-résistant). On préfère le verre E ou C.

Bien que l'invention concerne plus particulièrement des mats constitués de fibres minérales, notamment de verre ou de roche comme déjà mentionné, on ne saurait exclure que le mat contienne une faible proportion de fibres organiques, par exemple représentant au plus 20 % du poids des fibres minérales.

Les fibres organiques peuvent être des fibres synthétiques ou des fibres naturelles.

A titre d'exemples de fibres synthétiques, on peut citer les fibres constituées d'une polyoléfine, par exemple de polyéthylène ou de polypropylène, d'un polytéréphtalate d'alkylène, par exemple le polytéréphtalate d'éthylène, ou d'un polyester.

A titre d'exemples de fibres naturelles, on peut citer les fibres végétales, par exemple les fibres de coton, de noix de coco, de sisal, de chanvre ou de lin, et les fibres animales, par exemple la soie ou la laine.

Le mat de fibres minérales peut, le cas échéant, être renforcé par des fibres continues qui sont généralement déposées sur le dispositif de convoyage du mat dans le sens d'avancement du mat et réparties sur tout ou partie de la largeur du mat. Ces fibres sont généralement déposées dans l'épaisseur du mat, avant l'application du liant.

Les fibres de renforcement peuvent être des fibres minérales et/ou organiques de même nature chimique que les fibres précitées entrant dans la constitution du mat de fibres selon l'invention.

Les fibres de renforcement en verre sont préférées.

Le mat de fibres minérales présente généralement une masse surfacique qui varie de 10 à 1100 g/m², de préférence 30 à 350 g/m² et avantageusement 35 à 75 g/m².

Le liant représente généralement 5 à 40 % en poids du mat de fibres minérales, de préférence 10 à 30 %.

Le mat de fibres minérales conforme à la présente invention est plus particulièrement destiné à la réalisation de membranes d'étanchéité bitumineuses. Le mat de fibres minérales peut cependant être aussi utilisé dans d'autres applications, par exemple en tant que revêtement mural et/ou de plafond (à peindre ou non), revêtement de surface ou de jointement de panneaux de plâtre ou de ciment, revêtement de surface de produits d'isolation thermique et/ou phonique tels qu'une laine minérale ou une mousse destinée plus particulièrement à l'isolation de toitures, ou pour la réalisation de revêtement de sol, notamment une sous-couche acoustique.

Les exemples qui suivent permettent d'illustrer l'invention sans toutefois la limiter.

Dans ces exemples, on mesure la contrainte à la rupture d'un échantillon de 5 cm x 25 cm fixé à une extrémité sur un banc de traction et soumis à une élongation continue de 40 mm/minute. La contrainte à la rupture est exprimée en N/5 cm.

La contrainte à la rupture est mesurée après la fabrication (initiale) et après que l'échantillon a été traité dans les conditions suivantes (a) vieillissement accéléré dans une enceinte chauffée à 50°C sous 98 % d'humidité relative pendant 3 jours, (b) traitement dans de l'eau à 80°C pendant 10 minutes. On exprime le résultat par le pourcentage de rétention qui est égal à : (contrainte à la rupture après traitement/contrainte à la rupture initiale) x 100.

### EXEMPLES 1 A 6

On prépare des liants aqueux comprenant les constituants figurant dans le tableau 1 dans des proportions exprimées en parts pondérales de matières solides. Le liant de référence (noté Réf.) est représentatif de l'état de la technique décrit dans WO 2012/172252.

Les liants sont préparés en introduisant les différents constituants dans un récipient contenant de l'eau à la température ambiante, sous agitation modérée.

La teneur en matières solides (extrait sec) des liants est égale à 20 %.

On utilise un mat de filaments de verre E ayant un diamètre de 13 µm et une longueur de 18 mm. La masse surfacique du mat est égale à 75 g/m².

On immerge le mat dans le liant pendant 30 secondes puis on élimine l'excès par aspiration. Le mat est ensuite traité dans une étuve à 210°C pendant 60 secondes. Au final, le mat contient 20 % en poids de liant.

Les propriétés de chaque mat sont données dans le tableau 1.

Les exemples 1 à 3 possèdent une contrainte à la rupture initiale et après vieillissement accéléré qui est améliorée par rapport à la Référence.

Les exemples 2, 3 et 6 présentent en outre une meilleure contrainte à la rupture après traitement à l'eau par rapport à la Référence.

**Tableau 1**

| | | | Ex. 1 | Ex. 2 | Ex. 3 | Ex. 4 | Ex. 5 | Ex. 6 | Réf. |
|---|---|---|---|---|---|---|---|---|---|
| **Composition du liant** | | | | | | | | | |
| | Lignosulfonate d'ammonium⁽¹⁾ | | 95 | 80 | 60 | - | - | - | 60 |
| | Lignosulfonate de sodium⁽²⁾ | | - | - | - | 80 | - | - | - |
| | Lignosulfonate de magnésium⁽³⁾ | | - | - | - | - | 80 | - | - |
| | Lignosulfonate de calcium⁽⁴⁾ | | - | - | - | - | - | 80 | - |
| | Hydroxyméthylfurfural | | 5 | 20 | 40 | 20 | 20 | 20 | - |
| | Glucose | | - | - | - | - | - | - | 40 |
| | Phosphate diammonique | | - | - | - | - | - | - | 5 |

| **Propriétés du mat** | | | | | | | | | |
|---|---|---|---|---|---|---|---|---|---|
| | Contrainte à la rupture (N/5 cm) | | | | | | | | |
| | | - Initiale | 40 | 63 | 80 | 42 | 62 | 48 | 30 |
| | | - Après vieillissement accéléré (a) | 48 | 61 | 77 | 2 | 3 | 41 | 27 |
| | | % rétention | 121 | 98 | 96 | 5 | 5 | 86 | 90 |
| | | - Après traitement à l'eau (b) | 0 | 14 | 33 | 0 | 0 | 29 | 11 |
| | | % rétention | 0 | 22 | 41 | 0 | 0 | 60 | 37 |

| | | | | | | | | | |
|---|---|---|---|---|---|---|---|---|---|
| ⁽¹⁾ T11N5 commercialisé par la société Tembec ⁽²⁾ Arbo N18 commercialisé par la société Tembec ⁽³⁾ Arbo MGLS commercialisé par la société Tembec ⁽⁴⁾ C12 commercialisé par la société Tembec | | | | | | | | | |

## Revendications

1. Mat comprenant des fibres minérales, **caractérisé en ce que** les fibres sont liées par un liant aqueux comprenant
- au moins un lignosulfonate d'ammonium ou un sel de métal alcalin ou alcalino-terreux d'acide lignosulfonique, et
- au moins un composé carbonylé choisi dans le groupe constitué par l'acétaldéhyde, le propionaldéhyde, le diméthoxyéthanal, le butyraldéhyde, notamment n-butyraldéhyde, le glyoxal, le malonaldéhyde, le succinaldéhyde, le glutaraldéhyde, le 2-hydroxyglutaraldéhyde, le 3-méthylglutaraldéhyde, l'adipaldéhyde, le subéraldéhyde, le sébacaldéhyde, le maléaldéhyde, le fumaraldéhyde, les poly(acroléines), l'amidon dialdéhyde, le furfural (2-furancarboxyaldéhyde), le 5-méthylfurfural (2-méthyl-5-furancarboxyaldéhyde), l'hydroxyméthylfurfural (2-hydroxyméthyl-5-furancarboxyaldéhyde), le 2,5-furancarboxydialdéhyde, la vaniline et les polymères de vaniline, notamment la bis-vaniline, le cinnamaldéhyde et les polymères de cinnamaldéhyde, le phtalaldéhyde, l'isophtalaldéhyde, le téréphtalaldéhyde et les oligomères de formule (III) et (IV) suivantes : 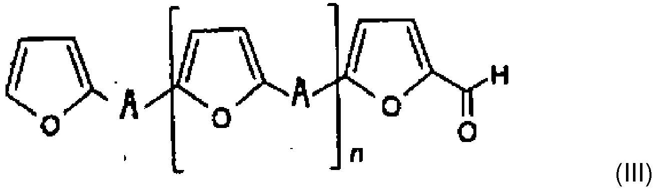 dans laquelle :
A représente un radical divalent -CH₂-, -CH(OH)- ou -CH₂-O-CH₂-,
n varie de 1 à 8, 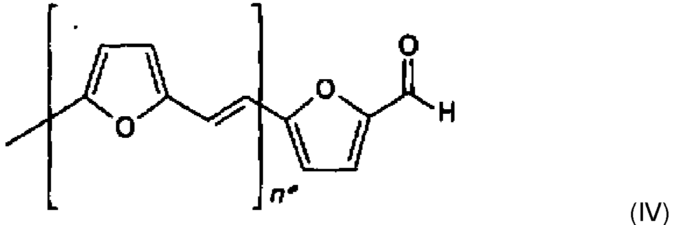
dans laquelle n' varie de 1 à 9,
ledit liant étant exempt de sucre hydrogéné et de mélamine.

2. Mat selon la revendication 1, **caractérisé en ce que** le lignosulfonate d'ammonium ou le sel de métal alcalin ou alcalino-terreux d'acide lignosulfonique représente 30 à 95 % du poids du mélange constitué par le lignosulfonate d'ammonium ou le sel de métal alcalin ou alcalino-terreux d'acide lignosulfonique et le composé carbonylé, de préférence 40 à 80 % et avantageusement 50 à 70 %.

3. Mat selon la revendication 1 ou 2, **caractérisé en ce qu'il** comprend en outre :
- au moins un homopolymère d'acétate de vinyle ou un copolymère d'acétate de vinyle et d'au moins un monomère hydrophobe, et
- au moins un polysaccharide.

4. Mat selon la revendication 3, **caractérisé en ce que** l'homopolymère ou copolymère d'acétate de vinyle et d'au moins un monomère hydrophobe est présent en une quantité au plus égale à 15 parts en poids pour 100 parts en poids de lignosulfonate d'ammonium ou de sel de métal alcalin ou alcalino-terreux d'acide lignosulfonique et de composé carbonylé.

5. Mat selon la revendication 3, **caractérisé en ce que** le polysaccharide est présent en une quantité au plus égale à 50 parts en poids pour 100 parts en poids de lignosulfonate d'ammonium ou de sel de métal alcalin ou alcalino-terreux d'acide lignosulfonique et de composé carbonylé.

6. Mat selon l'une des revendications 1 à 5, **caractérisé en ce qu'il** renferme un lignosulfonate d'ammonium et au moins un composé choisi parmi les composés contenant du phosphore et le sulfate d'ammonium.

7. Mat selon la revendication 6, **caractérisé en ce que** le composé contenant du phosphore et le sulfate d'ammonium sont présent en une quantité au plus égale à 20 parts en poids pour 100 parts en poids de lignosulfonate d'ammonium et de composé carbonylé.

8. Mat selon l'une des revendications 1 à 7, **caractérisé en ce qu'il** comprend en outre les additifs conventionnels ci-après dans les proportions suivantes calculées sur la base de 100 parts en poids de lignosulfonate d'ammonium ou de sel de métal alcalin ou alcalino-terreux d'acide lignosulfonique et de composé carbonylé :
- 0 à 1 part en poids de silane, de préférence 0,1 à 0,5 part,
- 0 à 5 parts en poids d'un silicone, d'une huile végétale ou d'un composé fluoré, de préférence 0,1 à 1 part, et
- 0 à 5 parts d'un agent plastifiant, en particulier le glycérol.

9. Mat selon l'une des revendications 1 à 8, **caractérisé en ce qu'il** renferme un sel de métal alcalin ou alcalino-terreux d'acide lignosulfonique et **en ce qu'**il est exempt de composés azotés.

10. Mat selon l'une des revendications 1 à 9 comprenant des fibres minérales de verre ou de roche.

11. Mat selon l'une des revendications 1 à 10, **caractérisé en ce qu'il** présente une masse surfacique qui varie de 10 à 1100 g/m², de préférence 30 à 350 g/m² et avantageusement 35 à 75 g/m².

12. Mat selon l'une des revendications 1 à 11, **caractérisé en ce que** le liant représente 5 à 40 % en poids dudit mat, de préférence 10 à 30 %.

13. Mat selon l'une des revendications 1 à 12, **caractérisé en ce qu'il** renferme des fibres organiques en une proportion au plus égale à 20 % du poids des fibres minérales.

## Patentansprüche

1. Matte, umfassend Mineralfasern, **dadurch gekennzeichnet, dass** die Fasern durch ein wässriges Bindemittel verbunden sind, umfassend
- mindestens ein Ammoniumlignosulfonat oder ein Alkali- oder Erdalkalimetallsalz von Lignosulfonsäure und
- mindestens eine Carbonylverbindung, gewählt aus der Gruppe bestehend aus Acetaldehyd, Propionaldehyd, Dimethoxyethanal, Butyraldehyd, insbesondere n-Butyraldehyd, Glyoxal, Malonaldehyd, Succinaldehyd, Glutaraldehyd, 2-Hydroxyglutaraldehyd, 3-Methylglutaraldehyd, Adipaldehyd, Suberaldehyd, Sebacaldehyd, Malealdehyd, Fumaraldehyd, Poly(acroleinen), Dialdehydstärke, Furfural (2-Furancarboxyaldehyd), 5-Methylfurfural (2-Methyl-5-furancarboxyaldehyd), Hydroxymethylfurfural (2-Hydroxymethyl-5-furancarboxyaldehyd), 2,5-Furancarboxydialdehyd, Vanillin und Polymeren von Vanillin, insbesondere Bisvanillin, Zimtaldehyd und Polymeren von Zimtaldehyd, Phthalaldehyd, Isophthalaldehyd, Terephthalaldehyd und Oligomeren von folgender Formel (III) und (IV): 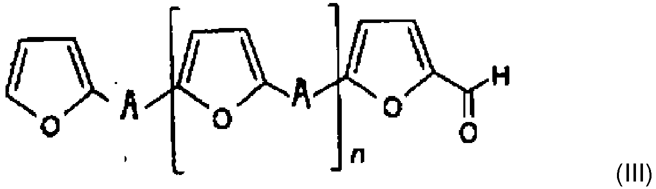 wobei:
A einen zweiwertigen Rest -CH₂-, -CH(OH)- oder -CH₂-O-CH₂- darstellt, wobei n von 1 bis 8 variiert, 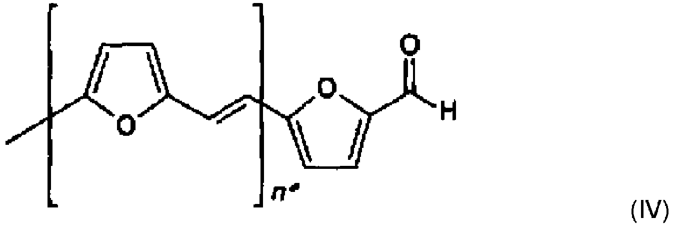
wobei n' von 1 bis 9 variiert,
wobei das Bindemittel frei von hydriertem Zucker und Melamin ist.

2. Matte nach Anspruch 1, **dadurch gekennzeichnet, dass** das Ammoniumlignosulfonat oder das Alkali- oder Erdalkalimetallsalz von Lignosulfonsäure 30 bis 95 Gewichts-%, vorzugsweise 40 bis 80 % und vorteilhafterweise 50 bis 70 % der Mischung darstellt, die aus dem Ammoniumlignosulfonat oder dem Alkali- oder Erdalkalimetallsalz von Lignosulfonsäure und der Carbonylverbindung besteht.

3. Matte nach Anspruch 1 oder 2, **dadurch gekennzeichnet, dass** sie des Weiteren Folgendes umfasst:
- mindestens ein Vinylacetat-Homopolymer oder ein Copolymer aus Vinylacetat und mindestens einem hydrophoben Monomer und
- mindestens ein Polysaccharid.

4. Matte nach Anspruch 3, **dadurch gekennzeichnet, dass** das Homopolymer oder Copolymer aus Vinylacetat und dem mindestens einen hydrophoben Monomer in einer Menge von höchstens gleich 15 Gewichtsteilen pro 100 Gewichtsteilen von Ammoniumlignosulfonat oder dem Alkali- oder Erdalkalimetallsalz von Lignosulfonsäure und der Carbonylverbindung vorhanden ist.

5. Matte nach Anspruch 3, **dadurch gekennzeichnet, dass** das Polysaccharid in einer Menge von höchstens gleich 50 Gewichtsteilen pro 100 Gewichtsteilen von Ammoniumlignosulfonat oder dem Alkali- oder Erdalkalimetallsalz von Lignosulfonsäure und der Carbonylverbindung vorhanden ist.

6. Matte nach einem der Ansprüche 1 bis 5, **dadurch gekennzeichnet, dass** sie ein Ammoniumlignosulfonat und mindestens eine Verbindung einschließt, gewählt aus den Verbindungen, die Phosphor und Ammoniumsulfat enthalten.

7. Matte nach Anspruch 6, **dadurch gekennzeichnet, dass** die Verbindung, die Phosphor und Ammoniumsulfat enthält, in einer Menge von höchstens gleich 20 Gewichtsteilen pro 100 Gewichtsteilen von Ammoniumlignosulfonat und der Carbonylverbindung vorhanden sind.

8. Matte nach einem der Ansprüche 1 bis 7, **dadurch gekennzeichnet, dass** sie des Weiteren nachstehende herkömmliche Zusatzstoffe umfasst, in den folgenden auf der Basis von 100 Gewichtsteilen von Ammoniumlignosulfonat oder dem Alkali- oder Erdalkalimetallsalz von Lignosulfonsäure und der Carbonylverbindung berechneten Anteilen:
- 0 bis 1 Gewichtsteil Silan, vorzugsweise 0,1 bis 0,5 Teile,
- 0 bis 5 Gewichtsteile ein Silikon, ein Pflanzenöl oder eine fluorierte Verbindung, vorzugsweise 0,1 bis 1 Teil, und
- 0 bis 5 Teile einen Weichmacher, besonders Glycerin.

9. Matte nach einem der Ansprüche 1 bis 8, **dadurch gekennzeichnet, dass** sie ein Alkali- oder Erdalkalimetallsalz von Lignosulfonsäure einschließt, **und dadurch, dass** sie frei ist von stickstoffhaltigen Verbindungen.

10. Matte nach einem der Ansprüche 1 bis 9, umfassend Mineralfasern aus Glas oder aus Stein.

11. Matte nach einem der Ansprüche 1 bis 10, **dadurch gekennzeichnet, dass** sie ein Flächengewicht aufweist, das von 10 bis 1.100 g/m², vorzugsweise von 30 bis 350 g/m² und vorteilhafterweise von 35 bis 75 g/m² variiert.

12. Matte nach einem der Ansprüche 1 bis 11, **dadurch gekennzeichnet, dass** das Bindemittel 5 bis 40 Gewichts-% der Matte, vorzugsweise 10 bis 30 % darstellt.

13. Matte nach einem der Ansprüche 1 bis 12, **dadurch gekennzeichnet, dass** sie organische Fasern in einem Anteil von höchstens gleich 20 Gewichts-% der Mineralfasern einschließt.

## Claims

1. Mat comprising mineral fibers, **characterized in that** the fibers are bonded by an aqueous binder comprising:
- at least one ammonium lignosulfonate or one alkali metal or alkaline earth metal salt of lignosulfonic acid, and
- at least one carbonyl compound chosen from the group consisting of acetaldehyde, propionaldehyde, dimethoxyethanal, butyraldehyde, in particular n-butyraldehyde, glyoxal, malonaldehyde, succinaldehyde, glutaraldehyde, 2-hydroxyglutaraldehyde, 3-methylglutaraldehyde, adipaldehyde, suberaldehyde, sebacaldehyde, malealdehyde, fumaraldehyde, poly(acroleins), dialdehyde starch, furfural (2-furancarboxyaldehyde), 5-methylfurfural (2-methyl-5-furancarboxyaldehyde), hydroxymethylfurfural (2-hydroxymethyl-5-furancarboxyaldehyde), 2,5-furancarboxydialdehyde, vanillin and vanillin polymers, in particular bis-vanillin, cinnamaldehyde and cinnamaldehyde polymers, phthalaldehyde, isophthalaldehyde, terephthalaldehyde and the oligomers of following formulae (III) and (IV): 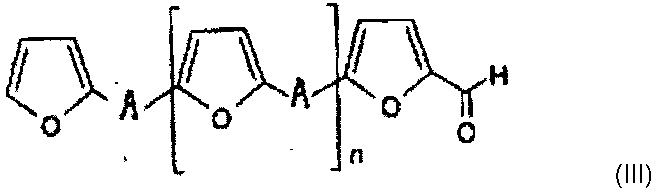 in which:
A represents a divalent -CH₂-, -CH(OH)- or -CH₂-O-CH₂- radical,
n varies from 1 to 8, 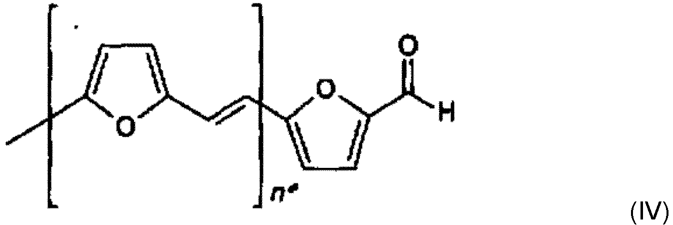
in which n' varies from 1 to 9,
said binder being devoid of hydrogenated sugar and of melamine.

2. The mat as claimed in claim 1, **characterized in that** the ammonium lignosulfonate or the alkali metal or the alkaline earth metal salt of lignosulfonic acid represents from 30 to 95% of the weight of the mixture consisting of the ammonium lignosulfonate or the alkali metal or the alkaline earth metal salt of lignosulfonic acid and the carbonyl compound, preferably from 40 to 80% and advantageously from 50 to 70%.

3. The mat as claimed in claim 1 or 2, **characterized in that** it additionally comprises:
- at least one vinyl acetate homopolymer or one copolymer of vinyl acetate and of at least one hydrophobic monomer, and
- at least one polysaccharide.

4. The mat as claimed in claim 3, **characterized in that** the homopolymer or copolymer of vinyl acetate and of at least one hydrophobic monomer is present in an amount at most equal to 15 parts by weight per 100 parts by weight of ammonium lignosulfonate or of alkali metal or alkaline earth metal salt of lignosulfonic acid and of carbonyl compound.

5. The mat as claimed in claim 3, **characterized in that** the polysaccharide is present in an amount at most equal to 50 parts by weight per 100 parts by weight of ammonium lignosulfonate or of alkali metal or alkaline earth metal salt of lignosulfonic acid and of carbonyl compound.

6. The mat as claimed in one of claims 1 to 5, **characterized in that** it includes an ammonium lignosulfonate and at least one compound chosen from phosphorus-containing compounds and ammonium sulfate.

7. The mat as claimed in claim 6, **characterized in that** the phosphorus-containing compound and the ammonium sulfate are present in an amount at most equal to 20 parts by weight per 100 parts by weight of ammonium lignosulfonate and of carbonyl compound.

8. The mat as claimed in one of claims 1 to 7, **characterized in that** it additionally comprises the conventional additives below in the following proportions, calculated on the basis of 100 parts by weight of ammonium lignosulfonate or of alkali metal or alkaline earth metal salt of lignosulfonic acid and of carbonyl compound:
- 0 to 1 part by weight of silane, preferably 0.1 to 0.5 part,
- 0 to 5 parts by weight of a silicone, of a vegetable oil or of a fluorinated compound, preferably 0.1 to 1 part, and
- 0 to 5 parts of a plasticizing agent, in particular glycerol.

9. The mat as claimed in one of claims 1 to 8, **characterized in that** it includes an alkali metal or alkaline earth metal salt of lignosulfonic acid **and in that** it is devoid of nitrogenous compounds.

10. The mat as claimed in one of claims 1 to 9 comprising rock or glass fibers.

11. The mat as claimed in one of claims 1 to 10, **characterized in that** it exhibits a weight per unit area which varies from 10 to 1100 g/m², preferably from 30 to 350 g/m² and advantageously from 35 to 75 g/m².

12. The mat as claimed in claim 1 to 11, **characterized in that** the binder represents from 5 to 40% by weight of said mat, preferably from 10 to 30%.

13. The mat as claimed in one of claims 1 to 12, **characterized in that** it includes organic fibers in a proportion at most equal to 20% of the weight of the mineral fibers.
